# EUROPEAN PATENT APPLICATION

(11) **EP 2 211 289 A1**
(43) Date of publication of application: **28.07.2010**
(21) Application number: 09100057.0
(22) Date of filing: 22.01.2009
(51) Int. Cl.: G06F 21/06

(54) **Method and control device for protecting a sensor against manipulation**

(71) Applicant: Robert Bosch GmbH, 70442 Stuttgart (DE)
(72) Inventor: Shokrollahi, Jamshid, Karlsruhe 76135 (DE)

(57) **Abstract**

A method for protecting a sensor against manipulation is proposed, the method comprising a step of determining at least one security value (272, 275) representing a physical characteristic of a body of the sensor and a step of providing the security value (272, 275) at an interface, wherein the at least one security value is usable to protect the sensor against manipulation.

## Description

### Prior Art

The invention relates to a method according to claim 1, a control device according to claim 11, a sensor according to claim 12 and a corresponding computer program product according to claim 13.

Sensors in automotive industry are to be protected against malicious manipulations. The considered sensors may be digital in the sense that their values are converted locally, e.g. inside the body of the sensor, to digital values and sent to a host. The considered manipulations can be aimed to change the main sensing unit or to manipulate the connection between the sensing unit and the A/D converter to affect the sensing values.

DE 10 2004 057 259 A1 discloses a manipulation protected microcontroller system comprising a processor unit, a source for confidential data and a bus connecting the processor unit and the source. Together with the source an access control unit is integrated on the same substrate. The access control unit decides dependent on signals being transferred on the bus, whether an output of confidential data out of the source is allowed or blocked.

### Disclosure of the invention

In view of the above, the present invention presents a method for protecting a sensor against manipulation, a control device using this method, furthermore a sensor and finally a computer program product according to the independent claims. Advantageous embodiments are defined in the dependent claims.

The present invention is based on the finding that the application of coating physical unclonable functions (PUF) and particularly its combination with silicon physical unclonable functions can be used for securing sensors. The proposed marriage not only increases the applicability for detecting physical tampers, but also increases the number of possible challenges and hence enables the possibility of re-using the sensor even if the corresponding physical unclonable functions key is compromised.

The present invention provides a method for protecting a sensor against manipulation, the method comprising: determining at least one security value representing a physical characteristic of a body of the sensor; and providing the security value at an interface, wherein the at least one security value is usable to protect the sensor against manipulation.

The sensor may be an automotive sensor comprising a sensing unit, an analog to digital converter for converting an analog sensing value into a digital sensing value and an output interface for providing the digital sensing value to a host. For example, the sensor may be a temperature, a pressure, acceleration, an optical, high-frequency signal or an ultrasonic sensor. A manipulation may comprise an opening or cutting of the body of the sensor or an extraction of secret data, like a secret key which are encrypted using at least one security value as the key and stored on the sensor, out of the sensor. The body of the sensor may include a package of the sensor. The body of the sensor may be designed such that the manipulation influences the physical characteristic of the sensor body. The physical characteristic may define a conductivity or capacity of the sensor body, a part of the sensor body or particular means integrated in the sensor body. The physical characteristics may be used for a physical unclonable function. A silicon based physical unclonable function or application of path delays can be used as described in Blaise Gassend, Dwaine Clarke, Marten van Dijk, and Srinivas Devadas; Silicon physical random functions; Technical Report Memo 456, Computer Science and Artificial Intelligence Laboratory; Massachusetts Institute of Technology, 2002. A coating PUF can be used as proposed in Boris Skoric, Geert-Jan Schrijen, Wil Ophey, Rob Wolters, Nynke Verhaegh, and Jan van Geloven; Experimental hardware for coating PUFs and optical PUFs. In Pim Tuyls, Boris Skoric, and Tom Kevenaar, editors, Security with Noisy Data, chapter 15, pages 255 -- 268. Springer Verlag, 2007 for tamper-proof chips.

The method may comprise a step of erasing secret data stored in the sensor, depending on the at least one security value. In this case the security value may indicate a manipulation of the physical characteristic and thus a manipulation of the sensor body. By erasing the secret data dependent on the indication of the manipulation by the security value, an adversary can be prevented from extracting the secret data from the sensor.

Additional or alternatively the method may include a step of generating a cryptographic key depending on the at least one security value. Generating the cryptography key from randomly distributed properties inside the sensor body, like the at least one security value, can be performed as proposed in R. Pappu; Physical One-Way Functions; PhD thesis; MIT; 2001. The mechanism to make a cryptography key from a PUF response may be a standard fuzzy extractor construction which can be found, e.g in Gookwon Edward Suh; AEGIS: A Single Chip Secure Processor; PhD thesis; Massachusetts Institute of Technology; 2005. The cryptography key may be used to encrypt a secret key which is used by the sensor for communication between the sensor and a host.

According to an embodiment, the at least one security value may represent a characteristic of a conductor arranged within the body of the sensor. The conductor may be used to measure connectivity, conductivity or a capacity within the sensor body.

The conductor may comprise a plurality of windings such that the conductor covers at least an area of the sensor body being vulnerable to mechanical manipulation. The distance of the wires and conductor pieces and dimensions of conducting pieces may be smaller than the size of the damage to the sensor body, which can be used to manipulate the sensor.

Thus, the at least one security value may represent a connectivity of the conductor. A manipulation of the sensor can be detected if the conductor is damaged or cut by the manipulation.

Further, the at least one security value may represent a runtime of a signal through the conductor, wherein the runtime may depend on di-electric materials being arranged within the body of the sensor. The di-electric materials may influence the capacity and thus the conductivity of the conductor. A manipulation of the sensor body may disturb the arrangement of the di-electric materials. By controlling the runtime through the conductor, such a manipulation can be detected. Further, if the arrangement of the di-electric material, for example within a package of the sensor is not reproducible, the security value is inimitable.

The conductor may comprise a first line and a second line and the at least one security value may represent a result of a comparison of a first runtime through the first line and a second runtime through the second line.

Further, the conductor may be divided into a plurality of sections being connected by switches wherein each switch may be configured to connect the first and second line of two adjacent sections in an uncrossed or a crossed manner, dependent on an individual control signal provided to the respective switch. By changing the connection of the sections of the lines, a plurality of different combinations can be realized, each having a different characteristic. Thus, the switches allow generating a plurality of different security values.

According to an embodiment, the method may comprise a step of providing a first set of individual control signals to the switches and determining a first security value dependent on the first set of individual control signals, a step of providing at least one second set of individual control signals to the switches and determining at least one second security value dependent on the at least one second set of individual control signals and a step of generating a cryptography key from the first security value and the at least one second security value. This allows creating a cryptographic key which depends on the physical characteristic of the sensor body.

The present invention further provides a control device for protecting a sensor against manipulation, comprising: means for determining at least one security value representing a physical characteristic of a body of the sensor; and means for providing the security value at an interface, wherein the at least one security value is usable to protect the sensor against manipulation. The control device may be configured to perform the inventive method for protecting a sensor against manipulation. The control device may be configured to be integrated in the sensor. The control device may be implemented as an electric circuit processing signals and providing control signals depending on the processing. The control device may comprise an interface being implemented in hardware and/or software. In a hardware implementation the interface may be part of a system ASIC, comprising various functions of the control device. Further, the interface may be implemented in individual integrated circuits or at least in part in discrete components. In a software implementation, the interface may comprise software modules which may be available on a microcontroller besides other software modules.

The present invention further provides a sensor comprising an inventive control device. Due to the inventive control device the sensor can be protected against manipulations.

An inventive computer program product comprising program code means stored on a computer readable data carrier is provided for performing the inventive method, when the computer program is executed on a computer or a corresponding processing unit, in particular on an inventive apparatus.

Other features and advantages of embodiments will become apparent to those skilled in the art upon review of the following detailed description, claims, and drawings. In the drawings:
- Fig. 1: shows a schematic view of a sensor according to an embodiment of the invention; and
- Fig. 2: shows a schematic diagram of a circuit for protecting the sensor according to an embodiment of the invention.

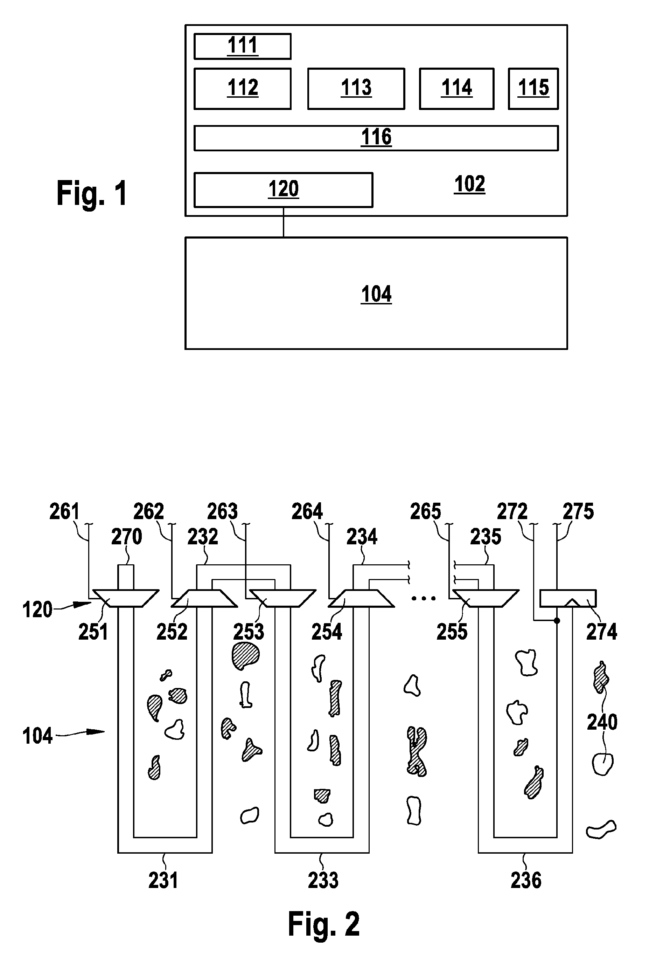

Fig. 1 shows a schematic view of a sensor comprising a circuit to secure the sensor against malicious manipulation, according to an embodiment of the invention. The sensor comprises an on board printed circuit board (PCB) 102 and means 104 which define a physical characteristic of a body of the sensor and/or allow to determine the physical characteristic of the body of the sensor. According to this embodiment the means 104 comprise wires and die-electric materials being arranged in a body of the sensor. The wires and die-electric materials 104 may be arranged such that they surround the printed circuit board 102 or at least parts of the printed circuit board 102 which are vulnerable to manipulations. For example, the wires and die-electric materials 104 may be arranged in a layer between the printed circuit board 102 and an outer surface of the sensor.

The printed circuit board 102 comprises a random access memory (RAM) 111, a FLASH memory 112, an encryption/decryption unit 113, an error correction unit 114, a hash unit 115 and a control unit 116. The printed circuit board 102 further comprises means 120 for determining at least one security value which represents the physical characteristic of the body of the sensor. According to this embodiment, the means 120 is realized by a delay measurement unit 120 which is connected to the wires and die-electric materials 104. The delay measurement unit 120 may be configured to provide the at least one security value to the control circuit 116 for further processing.

The sensor may further comprise means for implementing the actual sensing functionality of the sensor, like a sensing unit, an analog to digital converter and an interface for providing sensor data to a host.

Further, there may be a secure authentication mechanism installed in the sensor, in such a way that the sensor can ensure the host about its identity. Further, this authentication mechanism, or probably another auxiliary mechanism may guarantee the integrity of the data provided by the sensor. Finally the security of the authentication mechanism may be based on the secrecy of a unique cryptography key which is stored in encrypted form using the at least one security value as the key inside the sensor body.

The inventive approach is directed to the threat in which an opening or probably cutting is made in the body of the sensor to manipulate the values stored in or provided by the sensor. As a side effect, the inventive approach is directed to an attack in which an adversary extracts the secret inside the sensor body. By manipulating or opening the body of the sensor the physical structure will be damaged and hence the at least one security cannot be constructed anymore. In this way the adversary is not able to decipher the secret values which are stored in encrypted form on the sensor.

According to this embodiment, the protection mechanism consists of two layers of security which interact with each other. At the highest layer thin wires 104 are arranged inside the body of the sensor. The connectivity of the wires 104 is measure when the sensor is working. The connectivity may be measured by the delay measurement unit 120.

The advantage of this system is that it is not necessary to monitor the connectivity and the conductivity when the system is powered off, since manipulating will cause the at least one security value not to be constructable anymore and the secret values cannot be constructed.

The other layer of security is achieved by making the body of the sensor from di-electric materials 104 and randomly distributing conductor pieces inside the body. The di-electric materials 104 affect the capacitance of the conductor lines to ground, and hence the delay of each line, randomly.

Intuitively, the delay measurement unit 120 is configured to not only measure the connectivity of the conductor lines 104, but also to measure their delays. An attempt to cut or drill the body will disturb the structure of the di-electric material 104 and hence the capacitance and the delay.

According to the invention a cryptography key, called PUF (physical unclonable function) key is extracted from the capacitance such that when the body is disturbed, the key cannot be reconstructed. The PUF key may be used to encrypt the secret key for the communication between the sensor and the host.

The flash memory 112 may contain either public data or the encryption of secret values and hence there is no risk, if this circuit is in the hand of an adversary, when the system is powered off.

A main part of the invention is the construction of the PUF key which is used to encrypt or decrypt the communication key. In the following it is described how a PUF response is created from a challenge. The mechanism to make a cryptography key from this value may be a standard fuzzy extractor construction.

Fig. 2 shows a schematic diagram of the wires and di-electric materials 104 in the sensor body and the delay measurement unit 120, according to an embodiment of the invention.

A conductor comprises a plurality of sections 231, 232, 233, 234, 235, 236 each comprising a pair of lines. The lines may be arranged adjacently. According to this embodiment, the sections 231, 232, 233, 234, 235, 236 are arranged such, that the conductor comprises a plurality of winding which cover a specified area of the sensor body. Among the sections 231, 232, 233, 234, 235, 236 the di-electric material 240 is arranged. For reasons of clarity only two pieces of the di-electric material 240 are indicated with reference signs.

The di-electric material may be formed by a coating layer on top of the printed circuit board of the sensor, wherein the coating layer may comprise a random mixture of particles with different dielectric properties. A circuit characteristic being influenced by the di-electric material is beyond the control of a fabrication process.

The delay measurement unit 120 comprises a plurality of switches 251, 252, 253, 254, 255. A first switch 251 is connected to an input of the first section 231. A second switch 252 is configured to connect an output of the first section 231 with an input of the second section. A third switch 253 is configured to connect an output of the second section 232 with an input of the third section 233. A fourth switch 254 is configured to connect an output of the third section 233 with an input of the fourth section 234. A further switch 255 is configured to connect an output of a further section 235 with an input of a last section 236. Each switch 251, 252, 253, 254, 255 is configured to receive an individual control signal 261, 262, 263, 264, 265. Each switch 251, 252, 253, 254, 255 is configured to connect the two lines of two sections 231, 232, 233, 234, 235, 236 being connected to the respective switch 251, 252, 253, 254, 255 in a crossed manner or an uncrossed manner, dependent on the individual control signal 261, 262, 263, 264, 265 supplied to the respective switch 251, 252, 253, 254, 255. The control signals 261, 262, 263, 264, 265 may be provided by the delay control circuit shown in Fig. 1. The control circuit may be connected to the switches 251, 252, 253, 254, 255 by a number of M control lines. Fig. 2 shows the five control lines being connected to the five switches 251, 252, 253, 254, 255.

A clock signal 270 can be applied via the first switch 251 as an input to the first section 231. A connectivity of the sections 231, 232, 233, 234, 235, 236 can be controlled by detecting the clock signal 270 at an output of the last section 236. Therefore a watchdog 272 can be connected to the output of at least one line of the last section 236. A runtime through the sections 231, 232, 233, 234, 235, 236 can be controlled by an arbiter 274 which is connected to the two lines of the last section 236. The arbiter 274 may be configured to detect whether the clock signal 270 arrives first, respectively last, on the first line or the second line of the last section 236. The signal 275 comprising information about the runtime behavior of the sections 231, 232, 233, 234, 235, 236 can be provided by the arbiter 274 to the control circuit. Instead of the clock signal 270, any other kind of signal, being suitable to check the connectivity and runtime behavior of the conductor may be applied as an input to the first switch 251.

The signals 272, 275 are provided as security signals at an interface of the delay circuit to the control circuit. The control circuit may use the security signals for protecting the sensor against manipulation. In particular, the control circuit may use the security signals to decide about erasing secret data stored in the sensor and/or to generate a cryptographic key by using a plurality of successive values 275.

The circuit shown in Fig. 2 and in particular the paths 231, 232, 233, 234, 235, 236 inside the body of the sensor and the connected circuits allow computing the relative delays of the paths 231, 232, 233, 234, 235, 236.

Further, the circuit shown in Fig. 2 allows producing a binary string of length n, called response, from n binary strings of length m, together called challenge. Fig. 2 shows m switches 251, 252, 253, 254, 255 which, depending on their control lines 261, 262, 263, 264, 265, can either pass their input pair to the output or cross connect the pairs of input and output. I.e., when the control line 261, 262, 263, 264, 265 is "zero" the left input line is connected to the left output line and when the control line 261, 262, 263, 264, 265 is "one", the left input line is connected to the right output line.

Using the schematic shown in Fig. 2 and the m switches 251, 252, 253, 254, 255, 2^{m} paths of wires can be selected, each of them having their own capacitance and delay characteristic. The clock signal 270 is applied to the inputs of the first switch 251, whereas the arbiter 274 at the end detects which signal arrives earlier. This arrival order is the measure to decide for a bit which would be zero or one, depending on the order of input lines, and will be given to the control circuit as the output bit 275. Each of the m-bit challenges is the combination of control signals 261, 262, 263, 264, 265 applied to the switches 251, 252, 253, 254, 255. By n times repeating this procedure with n different challenges the n bit response is generated. The error in this value may be corrected and the result converted to a cryptography key by means of a standard fuzzy extractor construction. The watchdog line 272 is used to measure the connectivity of the wires 261, 262, 263, 264, 265. If there is no change on this line 272 for a specific period, the control circuit will detect a tampering activity. As a consequence of the tampering activity detected, the control circuit may erase the contents of the FLASH memory and the RAM shown in Fig. 1.

The sections 261, 262, 263, 264, 265 can be arranged in any order which is suitable for detecting a manipulation. For example, the sections 261, 262, 263, 264, 265 may cover an area of the sensor body like a net. In particular, a distance of adjacent wires and conductor pieces 261, 262, 263, 264, 265 and dimensions of conducting pieces may be smaller than the size of the damage to the body which can be used to manipulate the sensor.

For high security applications, a temperature sensor may be installed inside the body of the sensor. Using the temperature sensor, the temperature may be measured, regularly. As soon as the temperature goes below a specific level, the content of the RAM and FLASH memory can be erased. Due to the slowness of fuzzy extractor constructions, the PUF key may be constructed once upon start-up and stored in the RAM. An attacker can make the system very cold to slow-down the system. Afterwards the attacker can begin with cutting the body and reading the PUF key and decrypt the communication key. Note that the secret values are stored in plain inside RAM only when the system is powered on and hence the temparature sensing system must be activated only when the system is powered on.

To minimize the effects of external electric fields on the di-electric material and affecting the capacitance, the outer part of the senor body may be a layer of conductor, preferably connected to the ground of the system.

According to the invention physical unclonable functions are used to protect sensors against malicious manipulation. A combination of connectivity and capacitance measurements can be applied to protect against both, cutting and drilling the body of the sensor. By a combination of coating and silicon PUF reliability and re-usability can be increased, in the case that the PUF key is compromised. Further the possibility to make a drill-protective layer with regular spacing of wires and without power requirement during system power off is introduced.

The steps of the inventive method for protecting a sensor against manipulation can be performed by a control device integrated in the sensor. The control device may comprise the control circuit 116 and the delay measurement unit 120 shown in Fig. 1. Further, the wires and di-electric materials in the sensor body may be part of the control device for protecting the sensor against manipulation.

It should be noted that the previous mentioned features are usable not only in the respectively indicated combination, but also in further combinations or taken alone, without departing from the scope of the present invention.

The inventive approach can be used in sensors in the automotive industry or in sensors with other application areas. Further, the inventive approach may be used in connection with any integrated circuits which are to be protected against manipulations.

## Claims

1. Method for protecting a sensor against manipulation, the method comprising:
determining at least one security value (272, 275) representing a physical characteristic of a body of the sensor; and
providing the security value at an interface, wherein the at least one security value is usable to protect the sensor against manipulation.

2. Method according to claim 1, comprising a step of erasing secret data stored in the sensor, depending on the at least one security value (272).

3. Method according to one of the previous claims, comprising a step of generating a cryptography key depending on the at least one security value (275).

4. Method according to one of the previous claims, wherein the at least one security value (272, 275) represents a characteristic of a conductor (104; 261, 262, 263, 264, 265) arranged within the body of the sensor.

5. Method according to claim 4, wherein the conductor (104; 261, 262, 263, 264, 265) comprises a plurality of windings such that the conductor covers at least an area of the sensor body being vulnerable to mechanical manipulation.

6. Method according to one of claims 4 or 5, wherein the at least one security value (272) represents a connectivity of the conductor (104; 261, 262, 263, 264,265).

7. Method according to one of claims 4 to 6, wherein the at least one security value (275) represents a runtime of a signal (270) through the conductor (104; 261, 262, 263, 264, 265), wherein the runtime depends on di-electric materials (240) being arranged within the body of the sensor.

8. Method according to one of claims 4 to 7, wherein the conductor (104; 261, 262, 263, 264, 265) comprises a first line and a second line and wherein the at least one security value (275) represents a result of a comparison of a first runtime through the first line and a second runtime through the second line.

9. Method according to claim 8, wherein the conductor (104) is divided into a plurality of sections (261, 262, 263, 264, 265) being connected by switches (251, 252, 253, 254, 255) wherein each switch is configured to connect the first and second line two adjacent sections in an uncrossed or a crossed manner, dependent on an individual control signal (261, 262, 263, 264, 265) provided to the respective switch.

10. Method according to claim 9, comprising a step of providing a first set of individual control signals (261, 262, 263, 264, 265) to the switches (251, 252, 253, 254, 255) and determining a first security value (275) dependent on the first set of individual control signals, a step of providing at least one second set of individual control signals to the switches and determining at least one second security value dependent on the at least one second set of individual control signals and a step of generating a cryptographic key from the first security value and the at least one second security value.

11. Control device for protecting a sensor against manipulation, comprising:
means for determining at least one security value (272, 275) representing a physical characteristic of a body of the sensor; and
means for providing the security value at an interface, wherein the at least one security value is usable to protect the sensor against manipulation.

12. Sensor comprising a control device according to claim 11.

13. Computer program product comprising program code means stored on a computer readable data carrier, for performing all steps of a method according to one of the claims 1 to 10, when the computer program is executed on a computer or a corresponding processing unit.

## Amended claims

### Amended claims in accordance with Rule 137(2) EPC.

**1.** Method for protecting a sensor against manipulation, wherein a body of the sensor comprises a random mixture of particles (240) with different dielectric properties, which define a physical characteristic of the body, the method comprising:
determining at least one security value (272, 275) representing the physical characteristic of the body of the sensor;
providing the security value at an interface, and
generating a cryptography key depending on the at least one security value (275).

**2.** Method according to claim 1, comprising a step of erasing secret data stored in the sensor, depending on the at least one security value (272).

**3.** Method according to one of the previous claims, wherein a conductor (104; 261, 262, 263, 264, 265) is arranged within the body of the sensor and the at least one security value (272, 275) represents a characteristic of the conductor (104; 261, 262, 263, 264, 265) arranged within the body of the sensor.

**4.** Method according to claim 3, wherein the conductor (104; 261, 262, 263, 264, 265) comprises a plurality of windings such that the conductor covers at least an area of the sensor body being vulnerable to mechanical manipulation.

**5.** Method according to one of claims 3 or 4, comprising a step of applying a signal (270) suitable to check a connectivity of the conductor (104; 261, 262, 263, 264, 265) to the conductor and wherein the at least one security value (272) represents the connectivity of the conductor (104; 261, 262, 263, 264, 265).

**6.** Method according to one of claims 3 to 5, comprising a step of applying a signal (270) suitable to check a runtime behavior of the conductor (104; 261, 262, 263, 264, 265) to the conductor and wherein the at least one security value (275) represents a runtime of the signal (270) through the conductor (104; 261, 262, 263, 264, 265), wherein the runtime depends on di-electric materials (240) being arranged within the body of the sensor.

**7.** Method according to one of claims 3 to 6, wherein the conductor (104; 261, 262, 263, 264, 265) comprises a first line and a second line and wherein the at least one security value (275) represents a result of a comparison of a first runtime through the first line and a second runtime through the second line.

**8.** Method according to claim 7, wherein the conductor (104) is divided into a plurality of sections (261, 262, 263, 264, 265) being connected by switches (251, 252, 253, 254, 255) wherein each switch is configured to connect the first and second line two adjacent sections in an uncrossed or a crossed manner, dependent on an individual control signal (261, 262, 263, 264, 265) provided to the respective switch.

**9.** Method according to claim 8, comprising a step of providing a first set of individual control signals (261, 262, 263, 264, 265) to the switches (251, 252, 253, 254, 255) and determining a first security value (275) dependent on the first set of individual control signals, a step of providing at least one second set of individual control signals to the switches and determining at least one second security value dependent on the at least one second set of individual control signals and a step of generating a cryptographic key from the first security value and the at least one second security value.

**10.** Control device for protecting a sensor against manipulation, comprising:
a random mixture of particles (240) with different dielectric properties being arranged in a body of the sensor, wherein the random mixture of particles define a physical characteristic of the body;
means for determining at least one security value (272, 275) representing the physical characteristic of a body of the sensor;
means for providing the security value at an interface, wherein the at least one security value is usable to protect the sensor against manipulation; and
means for generating a cryptography key depending on the at least one security value (275).

**11.** Sensor comprising a control device according to claim 10.

**12.** Computer program product comprising program code means stored on a computer readable data carrier, for performing all steps of a method according to one of the claims 1 to 9, when the computer program is executed on a computer or a corresponding processing unit.
